# DEMANDE DE BREVET EUROPEEN

(11) **EP 0 791 775 A1**
(43) Date de publication de la demande: **27.08.1997**
(21) Numéro de dépôt: 97400378.2
(22) Date de dépôt: 20.02.1997
(51) Int. Cl.: F16L 11/12, F16L 9/12

(54) **Conduit de transport de fluide à pression et température élevées**

(30) Priorité: 22.02.1996 FR 9602191
(71) Demandeur: HUTCHINSON, F-75008 Paris (FR)
(72) Inventeur: Nicolas, Olivier, 92240 Malakoff (FR)
(74) Mandataire: Ramey, Daniel

(57) **Abrégé**

Conduit de transport de fluide à pression et température élevées, comprenant un tronçon intermédiaire (12) en matière plastique rigide raccordé à des tronçons (14) flexibles annelés entourés par des tresses tubulaires (22) fixées à leurs extrémités sur des parties rigides du conduit, ce conduit étant réalisé en une seule pièce par extrusion séquentielle ou par soudure bout à bout des tronçons (12) et (14).

L'invention s'applique notamment aux circuits de suralimentation en air et de refroidissement des moteurs à combustion interne.

## Description

L'invention concerne un conduit de transport de fluide, en particulier pour un circuit de refroidissement ou un circuit de suralimentation en air d'un moteur de véhicule automobile.

Les conduits de ce type doivent supporter en continu des pressions et des températures élevées, en général de l'ordre de 2,5 bars et de 150°C, et sont soumis à des vibrations et à des débattements relativement importants, par exemple de quelques dizaines de millimètres.

Ils sont donc constitués de conduits flexibles et de conduits rigides reliés bout à bout de façon étanche, comprenant par exemple des éléments d'extrémité en caoutchouc ou en élastomère à âme textile pour supporter les pressions ainsi que les vibrations et les débattements précités et un élément intermédiaire en thermoplastique rigide chargé de fibres et choisi pour supporter les températures élevées. Des bagues métalliques de renforcement sont insérées dans les extrémités de l'élément intermédiaire rigide, puis les extrémités des éléments flexibles sont enfilées sur les extrémités renforcées de l'élément intermédiaire et fixées en position par des colliers de serrage.

La fabrication de ces conduits nécessite un nombre relativement important d'opérations manuelles qui doivent être exécutées avec soin pour garantir une étanchéité correcte, et est donc longue, délicate et coûteuse.

La présente invention a essentiellement pour but d'éviter ces inconvénients, grâce à une simplification notable de la structure de ces conduits.

Elle propose, à cet effet, un conduit de transport de fluide, en particulier à pression et température élevées, réalisé en matière plastique et comprenant au moins un tronçon rigide raccordé de façon étanche à au moins un tronçon flexible pour supporter des vibrations et des débattements relativement importants, caractérisé en ce qu'il est réalisé en une seule pièce, les matières desdits tronçons étant de même nature ou compatibles et lesdits tronçons étant soudés bout à bout.

On peut ainsi obtenir un conduit comparable à ceux de la technique antérieure, comprenant un tronçon intermédiaire rigide raccordé de façon étanche à deux tronçons flexibles d'extrémité, mais qui est d'une seule pièce et ne comprend ni bague de renforcement, ni collier de serrage aux jonctions du tronçon rigide et des tronçons flexibles.

Les tronçons précités du conduit peuvent être reliés par soudure par ultrasons ou par vibrations ou bien le conduit peut être réalisé d'une seule pièce par extrusion séquentielle.

Selon une autre caractéristique de l'invention, le tronçon flexible précité est à structure annelée et comporte des moyens empêchant sa dilatation radiale et son allongement axial sous l'effet de la pression, ces moyens comprenant de préférence une tresse tubulaire qui entoure étroitement le tronçon flexible et qui est fixée à ses extrémités sur des parties rigides du conduit.

Selon divers modes de réalisation de l'invention, les extrémités de la tresse peuvent être fixées sur le conduit par des manchons surmoulés en matière plastique de préférence cellulaire ou expansée ou bien par des anneaux du type clipsables ou élastiquement encliquetables.

Dans une forme de réalisation préférée de l'invention, le tronçon rigide du conduit est de forme générale non rectiligne et est relié à un tronçon flexible précité à chacune de ses extrémités, il comporte au moins une patte de fixation sur un support et il est réalisé en une matière plastique chargée de fibres, en particulier de fibres de verre, cette matière pouvant être un polyamide, notamment un polyamide 6, un polyamide 12, un polyamide 6-6, des polyamides semi-aromatiques tels qu'un polyphtalamide, un alliage polyamidepolypropylène (par exemple du type "Orgalloy" de Elf-Atochem) ou un polytérephtalate de butylène, tandis que les tronçons flexibles sont réalisés en polyamide flexible (alliage polyamide-élastomère ou polyamide plastifié), en un alliage polyamide-polypropylène, en un élastomère thermoplastique à base de polyester, ou en un alliage polypropylène-EPDM rendu compatible avec les polyamides.

Un tel conduit est utilisable notamment pour raccorder la sortie d'un turbo-compresseur à un échangeur de chaleur dans un circuit de suralimentation en air d'un moteur à combustion interne, ou pour relier l'échangeur de chaleur au moteur. Il est également utilisable dans un circuit de refroidissement d'un moteur à combustion interne lorsque les matières plastiques des différentes parties du conduit sont choisies pour leur résistance au liquide de refroidissement (par exemple du PA6.6 ou du PA12).

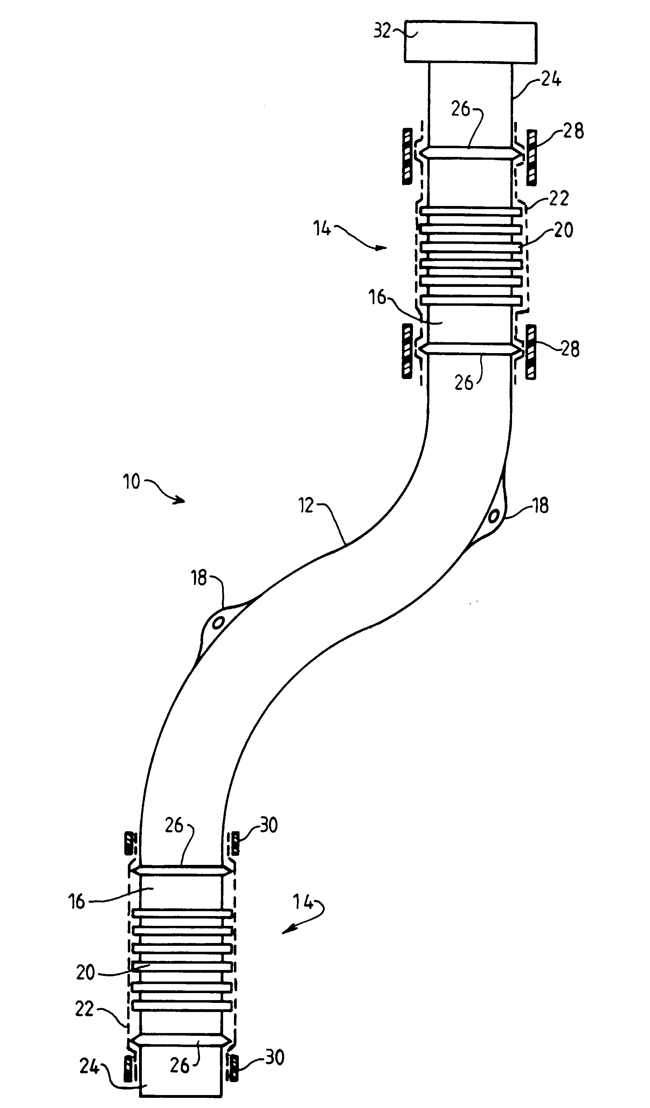

L'invention sera mieux comprise et d'autres caractéristiques, détails et avantages de celle-ci apparaîtront plus clairement à la lecture de la description qui suit, faite à titre d'exemple en référence au dessin annexé qui est une vue schématique en coupe axiale d'un conduit selon l'invention.

Ce conduit, désigné généralement par la référence 10, comprend une partie intermédiaire 12 de forme non rectiligne, par exemple coudée comme représentée au dessin, et deux parties d'extrémités 14 raccordées de façon étanche aux extrémités 16 de la partie intermédiaire 12.

Cette partie intermédiaire 12 est en matière plastique rigide et comporte une ou plusieurs pattes 18 de fixation ou d'accrochage sur un support non représenté. Les parties d'extrémités 14 sont en matière plastique souple ou flexible et ont une structure annelée 20 permettant d'accroître leur flexibilité.

Des moyens sont prévus pour limiter les expansions radiales et axiales de ces structures annelées 20 sous l'effet de la pression et de la température du fluide destiné à circuler dans le conduit 10. Dans l'exemple représenté, ces moyens sont constitués d'une tresse tubulaire 22, par exemple en fibres de verre ou de matière synthétique, qui entoure étroitement chaque partie d'extrémité 14 et qui est fixée à ses extrémités sur des parties rigides du conduit 10, c'est-à-dire sur une extrémité 16 de la partie intermédiaire 12 et sur un embout 24 de matière plastique rigide prolongeant chaque partie d'extrémité 14.

Pour faciliter cette fixation, les extrémités 16 de la partie intermédiaire 12 et les embouts 24 peuvent être formés chacun avec au moins une nervure périphérique 26 constituant un moyen de blocage et de positionnement d'une extrémité d'une tresse tubulaire 22.

Les moyens de fixation proprement dits des extrémités des tresses 22 sur les parties rigides du conduit 10 peuvent être de tout type approprié.

Avantageusement, on peut surmouler sur les extrémités des tresses 22 des manchons 28 de matière plastique de préférence cellulaire ou expansée, comme représenté schématiquement en partie supérieure du dessin, en procédant de la façon suivante :

on place les parties du conduit 10 devant recevoir ces manchons dans des moules de surmoulage, on ferme les moules, et on y injecte une matière plastique qui s'expanse à l'intérieur des moules. Cette expansion de la matière plastique dans les moules de surmoulage se traduit par un serrage et une fixation robuste des extrémités des tresses tubulaires 22 sur les parties rigides du conduit 10.

On pourrait aussi réaliser les surmoulages 28 en matière plastique compacte, mais les surmoulages de matière cellulaire ou expansée présentent l'avantage de nécessiter une pression d'injection beaucoup plus faible.

En variante, et comme représenté schématiquement sur la partie inférieure du conduit 10, on peut fixer les extrémités des tresses tubulaires 22 au moyen d'anneaux 30 du type à serrage par clipsage ou par encliquetage élastique, qui sont réalisées en métal ou en matière plastique et qui entourent les extrémités des tresses tubulaires 22 au-delà des nervures 26 par rapport aux structures annelées 20.

Lorsque les tresses tubulaires 20 sont ainsi fixées sur des parties rigides du conduit 10 aux extrémités des parties flexibles 14, elles empêchent sensiblement toute expansion radiale et tout allongement axial de ces parties 14 qui seraient autrement provoqués par la pression et la température relativement élevées du fluide destiné à circuler dans le conduit 10.

Les extrémités libres des embouts rigides 24 sont avantageusement équipées de moyens de connexion tels par exemple que des systèmes 32 de raccord rapide comme représenté schématiquement en partie supérieure du conduit 10 ou bien peuvent recevoir des conduits souples en caoutchouc ou analogue fixés par des colliers de serrage ou par tout autre moyen approprié.

On peut d'ailleurs fixer l'extrémité d'une tresse 22 et l'extrémité d'un conduit souple en caoutchouc sur un embout rigide 24 au moyen d'un seul et même surmoulage 28 du type décrit plus haut.

Les matières plastiques dont sont constituées les différentes parties 12, 14 et 24 des conduits 10 selon l'invention, sont choisies pour être de même type ou de même nature ou compatibles entre elles de façon à ce que les raccordements étanches de ces différentes parties s'effectuent par soudure, c'est-à-dire par simple chauffage sans apport d'une matière adhésive quelconque.

Les parties rigides 12 et 24 des conduits 10 peuvent être fabriquées indépendamment et séparément des parties flexibles 14 et être ensuite raccordées par soudure aux extrémités de ces parties 14, après quoi les tresses tubulaires 22 sont enfilées sur les parties 14 et fixées au niveau des nervures 26 des parties rigides comme indiqué plus haut.

En variante, le conduit selon l'invention peut être fabriqué d'une seule pièce, par extrusion séquentielle d'abord d'une matière rigide pour former un embout 24, puis d'une matière flexible pour former une partie 14, puis d'une matière rigide pour former la partie intermédiaire 12, ensuite d'une matière flexible pour former l'autre partie 14 et enfin d'une matière rigide pour former l'autre embout d'extrémité 24. Les formes particulières de la partie intermédiaire 12 et des parties flexibles 14 ainsi que les nervures 26 peuvent être obtenues par extrusion-soufflage et/ou par extrusion-succion.

La ou les pattes 18 de fixation ou d'accrochage prévues sur la partie intermédiaire 12 sont par exemple en matière plastique rigide chargée de fibres et peuvent constituer des inserts placés préalablement dans un moule d'extrusion-soufflage et/ou d'extrusion-succion de la partie 12 ou fixés ultérieurement sur cette partie 12 par soudure lors d'une opération de reprise.

Les matières plastiques utilisables pour former les conduits 10 selon l'invention sont par exemple les suivantes :
- un polyamide 6 contenant de l'ordre de 10 à 30 % de fibres de verre pour les parties rigides et un polyamide flexible, c'est-à-dire ayant un module d'élasticité de l'ordre de 100 à 500 MPa pour les parties 14, ce polyamide flexible étant par exemple un polyamide mélangé à de l'élastomère ou un polyamide contenant une plus grande quantité de plastifiant que la normale,
- un alliage polyamide-propylène chargé de fibres de verre pour les parties rigides du conduit, et le même alliage non chargé de fibres de verre pour les parties flexibles,
- un polyamide 6.6 chargé de fibres de verre pour les parties rigides et un polyamide 6.6 non chargé de fibres de verre pour les parties flexibles,
- un polyamide 12 chargé de fibres de verre pour les parties rigides et un polyamide 12 non chargé de fibres de verre pour les parties flexibles,
- un PBT (polytérephtalate de butylène) chargé de fibres de verre pour les parties rigides et un TEEE (un élastomère thermoplastique à base de polyester) pour les parties flexibles du conduit.

Dans un exemple de réalisation, donné à titre non limitatif, d'un conduit selon l'invention destiné à raccorder la sortie d'un turbo-compresseur à l'entrée d'un échangeur de chaleur dans un circuit de suralimentation en air d'un moteur à combustion interne de véhicule automobile, les épaisseurs des parties rigides sont de l'ordre de 2,5 mm et celles des parties souples d'environ 1,5 mm. Les extrémités des tresses tubulaires 22 sont fixées par des surmoulages de matière plastique cellulaire ou expansée, ayant une longueur d'une vingtaine de millimètres et une épaisseur de 3 mm environ. Un tel conduit supporte en continu des pressions de l'ordre de 2,5 bars et des températures de 150°C. Il supporte également des débattements de plusieurs dizaines de millimètres entre sa partie intermédiaire rigide 12 et ses extrémités raccordées au turbo-compresseur et à l'échangeur de chaleur. Les pattes 18 de fixation ou d'accrochage du conduit sur la caisse du véhicule permettent d'empêcher le fluage de ce conduit sous son propre poids.

Les conduits selon l'invention sont également utilisables dans les circuits de refroidissement des moteurs à combustion interne pour véhicules automobiles, notamment lorsqu'ils sont réalisés en polyamide 6.6 ou 12.

## Revendications

1. Conduit de transport de fluide, en particulier à pression et température élevées, réalisé en matière plastique et comprenant au moins un tronçon rigide (12) raccordé de façon étanche à au moins un tronçon flexible (14) pour supporter des vibrations et des débattements relativement importants, caractérisé en ce qu'il est réalisé en une seule pièce, les matières des tronçons rigide (12) et flexible (14) étant de même nature ou compatibles, lesdits tronçons (12, 14) étant soudés bout à bout.

2. Conduit selon la revendication 1, caractérisé en ce que les tronçons précités (12, 14) sont reliés par soudure par ultrasons ou par vibrations.

3. Conduit selon la revendication 1, caractérisé en ce qu'il est réalisé d'une seule pièce par extrusion séquentielle.

4. Conduit selon une des revendications 1 à 3, caractérisé en ce que le tronçon flexible (14) précité est à structure annelée (20) et comporte des moyens (22) empêchant son expansion radiale et son allongement axial.

5. Conduit selon la revendication 4, caractérisé en ce que les moyens précités comprennent une tresse tubulaire (22) entourant étroitement le tronçon flexible (14) et fixée à ses extrémités sur des parties rigides (16, 24) dudit conduit.

6. Conduit selon la revendication 5, caractérisé en ce que les extrémités de la tresse (22) sont fixées sur le conduit par des manchons (28) surmoulés.

7. Conduit selon la revendication 6, caractérisé en ce que les manchons surmoulés (28) sont en matière plastique cellulaire ou expansée.

8. Conduit selon la revendication 5, caractérisé en ce que les extrémités de la tresse (22) sont fixées sur le conduit par des anneaux (30) du type à serrage par clipsage ou par encliquetage élastique.

9. Conduit selon l'une des revendications 5 à 8, caractérisé en ce que ses parties sur lesquelles sont fixées les extrémités de la tresse (22) comprennent au moins une nervure annulaire (26) formant une butée de blocage et de positionnement des moyens de fixation de la tresse.

10. Conduit selon l'une des revendications précédentes, caractérisé en ce que ses extrémités (24) sont rigides et équipées de moyens (32) de connexion.

11. Conduit selon l'une des revendications 6 à 10, caractérisé en ce qu'au moins une de ses extrémités rigides (24) est équipée d'un conduit souple de connexion en caoutchouc ou analogue, fixé sur ladite extrémité par un surmoulage (28) servant également à la fixation de l'extrémité d'une tresse (22) précitée.

12. Conduit selon l'une des revendications précédentes, caractérisé en ce que le tronçon rigide (12) précité comporte au moins une patte (18) de fixation ou d'accrochage sur un support.

13. Conduit selon l'une des revendications précédentes, caractérisé en ce que le tronçon rigide (12) précité est de forme générale non rectiligne et est relié à un tronçon flexible (14) du type précité à chacune de ses extrémités.

14. Conduit selon l'une des revendications précédentes, caractérisé en ce que le tronçon rigide (12) est en une matière plastique chargée de fibres, telles que des fibres de verre, cette matière plastique étant par exemple un polyamide, un alliage polyamide-polypropylène ou un polytérephtalate de butylène.

15. Conduit selon l'une des revendications précédentes, caractérisé en ce que le ou chaque tronçon flexible (14) est réalisé en un mélange polyamide-élastomère, en un polyamide à forte quantité de plastifiant, en un alliage polyamide-propylène en un élastomère thermoplastique à base de polyester, ou en un alliage polypropylène-EPDM rendu compatible avec les polyamides.
